# EUROPÄISCHE PATENTSCHRIFT

(11) **EP 0 872 786 B1**
(45) Veröffentlichungstag und Bekanntmachung des Hinweises auf die Patenterteilung: **19.09.2001**
(21) Anmeldenummer: 98106129.4
(22) Anmeldetag: 03.04.1998
(51) Int. Cl.: G05B 19/042, H02J 13/00, B60R 16/02

(54) **System aus drahtbusvernetzten Steuergeräten mit verringertem Ruhestrombedarf**
System comprising control devices with a reduced quiescent current connected to a data bus
Système composé d'appareils de commande ayant un faible courant de repos connectés à une ligne omnibus

(30) Priorität: 16.04.1997 DE 19715880
(43) Veröffentlichungstag der Anmeldung: 21.10.1998
(73) Patentinhaber: Micro Compact Car smart GmbH, 71272 Renningen (DE)
(72) Erfinder: Will, Ralf, 71272 Renningen (DE)
(74) Vertreter: Weiss, Klaus

(56) Entgegenhaltungen:
- EP-A- 0 279 168
- EP-A- 0 392 411
- EP-A- 0 444 997
- DE-A- 4 427 254
- US-A- 3 864 578
- US-A- 4 987 317
- US-A- 5 408 471
- US-A- 5 534 848

## Beschreibung

Die Erfindung betrifft ein System aus drahtbusvernetzten Steuergeräten mit verringertem Systemruhestrombedarf gemäß Anspruch 1.

Viele technische Güter und Anlagen werden durch den Einsatz von Bus-Systemen revolutioniert. Ein Beispiel ist z.B. der CAN-Bus in Verkehrsmitteln, wie in "CAN - ein Auto-Bus" in der FZ Messen und Prüfen, Juni 1992, S. 46-53 abgehandelt. Hierbei sind eine Vielzahl von elektronischen Steuergeräten über einen zweidrähtigen Datenbus miteinander verbunden. Die dabei mögliche Funktionsübertragung auf dem Datenbus spart Verkabelungskosten ein und ermöglicht eine einfache und leicht erweiterbare Systemarchitektur. Ein derartiges System zum Einsatz bei der Fahrzeugtechnik ist bereits aus der DE 44 27 254 A1 bekannt.

So vernetzte Systeme aus drahtbusvernetzten Steuergeräten haben bezüglich der Steuergerätefunktion jedoch den Nachteil, daß der Datenbus in der Regel nur durch Aktivierung eines zentralen Bestromungstores - beim Beispiel eines Verkehrsmittels also z.B. der "Zündschloßschalter" - aktiviert wird. Dies bedeutet, daß (a) entweder den Steuergeräten trotz vorhandenen Datenbusses Eingangssignale konventionell zugeführt werden müssen, um auch im Zustand des Systemstillstandes mit entsprechenden Funktionen arbeiten zu können, also z.B. dann, wenn bei einem Kraftfahrzeug die "Klemme 15" spannungslos ist. Daraus resultiert wiederum das nachteilige Erfordernis vieler konventioneller Leitungen. Ein Beispiel hierfür ist z.B. das Wecken eines Instrumentenverbunds in der Armaturentafel von einem Türkontakt aus, um Displayinformationen darin gleich anzuzeigen. Andererseits wäre z.B. die Übertragung der Warnblinkfunktion eines Fahrzeugs über den z.B. CAN-Bus prinzipiell möglich. Bei spannungsloser "Klemme 15" ist jedoch eine Kontrollanzeige der eingeschalteten Warnblinkanlage im stromlosen Instrumentenfeld nicht möglich. Weiter bedeutet dies im Falle z.B. eines Kraftfahrzeugs, daß (b) Steuergeräte einen kontinuierlichen Standby-Betriebszustand mit aktiviertem CAN-Bus vorsehen bzw. ermöglichen müssen. Daraus resultiert jedoch ein hoher Ruhestrombedarf des Gesamtsystems, der die Bordnetz-Energiebilanz beinträchtigt.

Im IBM Technical Disclosure Bulletin Vol. 25, No. 7B aus 12/1982 ist ein auf intelligenten Makros basierendes Computersystem beschrieben, dessen Komponenten entlang eines Busses verteilt angeordnet sind und das einen reduzierten Strombedarf aufweist. Dabei werden über Makros jeweils zur Ausführung bestimmter Operationen bestimmte Komponenten des Computersystems bedarfsweise selektiv mit Strom versorgt. Dies setzt jedoch voraus, daß jede über Makros ansprechbare Funktion eine gewisse, ohne Ruhestromversorgung nicht mögliche Makro-Diskriminationsfunktion realisiert.

Die US 3 864 578 offenbart ein System mit einem Codierer, der über eine Datenleitung mit mehreren Decodierern vernetzt ist. Zur Stromersparnis ist ein Standby-Betrieb vorgesehen, wobei dann jeder Decodierer im Standby-Modus betrieben ist. Zwischen den Steuergeräten ist ein Taktsignal vorgesehen, über das die Decodierer aus dem jeweiligen Standby-Betrieb geweckt werden können. Es besteht jedoch weiterhin das Problem, daß bei einer großen Anzahl von Decodierern ein nicht zu vernachlässigender Ruhestrom von der Stromquelle aufgenommen wird.

Dem gegenüber ist es Aufgabe der Erfindung, ein System aus drahtbusvernetzten Steuergeräten vorzuschlagen, welches insgesamt einen erheblich verringerten Ruhestrombedarf aufweist.

Diese Aufgabe wird bei einem System aus drahtbusvernetzten Steuergeräten erfindungsgemäß dadurch gelöst, daß alle Steuergeräte zwecks ihrer betrieblichen Stromversorgung an zwei Versorgungsschienen angeschlossen sind und diese mit den Speisepolen einer Betriebsstromquelle dauerhaft in Verbindung stehen. Eines der Steuergeräte ist mit einer Standby-Betriebsfunktion mit Weckbereitschaft ausgestattet und in Weckbereitschaft dauernd aktiv und weist - außer seiner Kommunikationsverbindung mit dem Buswenigstens einen separaten Signaleingang auf, über den es geweckt werden kann. Des weiteren weist es einen Steuerausgang auf, der bei Erreichen seines normalen Betriebszustandes (aus der Weckbereitschaft) ein Anschaltsignal abzugeben vermag. Jedes der übrigen Steuergeräte weist interne Mittel für seine steuerbare Stromversorgung aus den beiden Versorgungsschienen und einen Anschaltsteuereingang auf, dem ein Steuersignal zur Aktivierung besagter internen Mittel zuführbar ist. Alle diese Steuereingänge sind mit dem vorgenannten Steuerausgang des Standby-fähigen Steuergerätes verbunden, so daß bei Ausgabe des Anschaltsignals die übrigen Steuergeräte bestrombar und somit in Betriebsbereitschaft versetzbar sind. Im Standby-Betrieb nimmt nur ein Steuergerät einen Ruhestrom auf, während die übrigen Steuergeräte abgeschaltet sind.

Diese Systemkonfiguration hat einen sehr geringen Ruhestrombedarf zur Folge, da nur ein einziges Steuergerät für einen Standby-Mode mit Weckbereitschaft ausgeführt zu sein braucht. Im beispielhaften Falle eines Energiespeichers als Betriebsstromquelle ist so z.B. mit 1-2 mA Gesamtruhestrom eine theoretische Standzeit von wenigstens 200 Tagen aus 10 Ah Kapazitätsabbau gewährleistet. Da die Selbstentladungsrate des Energiespeichersbeispielsweise eines Blei-Akkumulators - schon beträchtlich größer als 50 mAh/d sein kann, sind gemäß der Erfindung autarke bzw. mobile Systeme verwirklichbar, bei denen der Ruhestromverbrauch praktisch nicht mehr ins Gewicht fällt.

Gemäß Anspruch 2 ist das System Bestandteil eines Verkehrsmittels. Bei einem solchen System ergibt sich z.B. der Vorteil, daß beispielsweise eine Warnblink-Information über den Datenbus übertragbar ist. Bei einem System in einem Verkehrsmittel gemäß Anspruch 3 ist dem Steuergerät mit Standby-Betriebsfunktion an seinem wenigstens einen separaten Signaleingang ein Signal aufgrund der Betätigung eines Türkontakts zuführbar. Daraus ergibt sich der Vorteil, daß z.B. der Instrumentenverbund in der Armaturentafel eines Kraftfahrzeugs über den Datenbus weckbar ist. Bei einem weiterentwickelten System gemäß Anspruch 4 ist dem Steuergerät mit Standby-Betriebsfunktion an seinem wenigstens einen separaten Signaleingang ein Signal aufgrund des Empfanges im Verkehrsmittel einer von extern eingestrahlten Fernbedienungsinformation zuführbar. Gemäß Anspruch 5 kann das Steuergerät mit Standby-Betriebsfunktion mit Mitteln ausgestattet sein, die es ihm ermöglichen, einen Zutritt zum Verkehrsmittel zu erkennen. Gemäß Anspruch 6 kann eines der übrigen Steuergeräte wenigstens Funktionen zur Kontrolle und Steuerung der Fahrberechtigung integral mitumfassen und so beschaffen sein, daß es eine empfangene Information "Verkehrsmittelstart" an die Antriebskomponenten des Verkehrsmittels übermitteln und dadurch den Start seiner Antriebseinheit auslösen kann. Gemäß Anspruch 7 kann das Steuergerät mit Standby-Betriebsfunktion die Funktion eines Steuergeräts zur Kontrolle und Steuerung der Fahrberechtigung integral mitumfassen und so beschaffen sein, daß es eine empfangene Information "Verkehrsmittelstart" an die Antriebskomponenten des Verkehrsmittels zu übermitteln und dadurch den Start seiner Antriebseinheit auszulösen vermag. Bei einer Ausbildung des Systems gemäß Anspruch 8 ist der Bus vom CAN-basierten Typ. Bei einem gemäß Anspruch 9 fortgebildeten System handelt es sich bei einem der übrigen Steuergeräte um ein Kombiinstrument in der Armaturentafel, ABS-Steuergerät, Motorsteuergerät oder Komfort-Steuergerät.

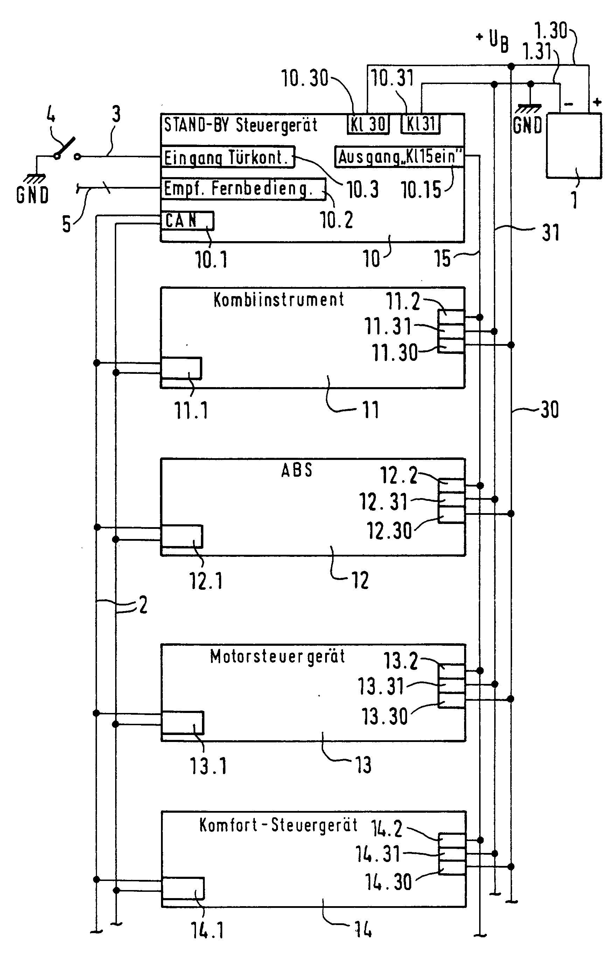

Ein Ausführungsbeispiel der Erfindung ist in der Zeichnung dargestellt und nachfolgend näher beschrieben. Die einzige Figur zeigt ein schematisches Blockschaltbild eines beispielhaft fünf Steuergeräte 10 bis 14 umfassenden Systems gemäß der Erfindung. Dabei wird hier zur Veranschaulichung beispielhaft von einem sehr speziellen System in einem Kraftfahrzeug ausgegangen, was jedoch keine Einschränkung der Erfindung vorsieht.

Die Steuergeräte 10 bis 14 enthalten je ein Bus-Interface 10.1 bis 14.1. (Transceiver), das die Steuergeräte physikalisch an einen hier zweidrähtig ausgeführten Bus, beispielsweise vom CAN-Typ, ankoppelt. Jedes der Steuergeräte 10 bis 14 weist erste Speiseanschlüsse 10.31 bis 14.31, beispielsweise für ein negatives Massepotential GND der Betriebsstromquelle 1 und zweite Speiseanschlüsse 10.30 bis 14.30 für ein positives Versorgungspotential +U_{B} auf. Alle ersten Speiseanschlüsse 10.31 bis 14.31 sind mit einer Versorgungsschiene 31 verbunden, die ihrerseits dauerhaft am negativen Anschluß 1.31 der Betriebsstromquelle 1 liegt. Alle zweiten Speiseanschlüsse 10.30 bis 14.30 sind mit einer Versorgungsschine 30 verbunden, die ihrerseits dauerhaft am positiven Anschluß 1.30 der Betriebsstromquelle 1 liegt.

Die Versorgungsschiene 31 ist z.B. durch die elektrisch hochleitende Karosse des Kraftfahrzeugs (Fahrzeugmasse GND) verkörperlicht bzw. durch die "Klemme 31" gebildet. Die Versorgungsschiene 30 ist z.B. durch den positiven Batteriestromverteiler im Kraftfahrzeug verkörperlicht bzw. durch die "Klemme 30" gebildet.

Beim Steuergerät 10 handelt es sich um das eine Steuergerät mit Standby-Funktion, welches über seine Speiseklemmen 10.30 und 10.31 dauernd wenigstens einen schwachen Ruhestrom aus der Betriebsstromquelle 1 aufnimmt, um daraus seine Weckbereitschaft zu generieren. Es ist ein Weckeingang 10.3 "Eingang Türkontakt" angedeutet, der hier beispielhaft über eine Eingangsleitung 3 von einem an Masse GND liegenden Türkontakt 4 mit Massepotential beaufschlagbar ist. Des weiteren ist ein beispielhaft mehrpoliger Eingang 10.2 "Empfänger Fernbedienung" angedeutet, welchem von einem beispielsweise auf Infrarot- oder Mikrowellenbasis arbeitenden Fernsteuerempfänger ein Empfangssignal zuführbar ist. Das Steuergerät 10 weist außerdem einen Anschaltsteuerausgang 10.15 auf, der ein logisches Anschaltsignal beispielsweise entsprechend dem normalerweise an "Klemme 15" eines Kraftfahrzeugs anstehenden Potentials "Klemme 15 ein" auf die Anschaltsteuerleitung 15 auszugeben vermag.

Das Steuergerät 10 mit Standby-Betriebsfunktion kann beispielsweise mit Mitteln ausgestattet sein, die es ihm ermöglichen, einen Zutritt zum Verkehrsmittel zu erkennen. Gleichwohl kann dieses Steuergerät beispielsweise die Funktion eines Steuergeräts zur Kontrolle und Steuerung der Fahrberechtigung integral mitumfassen und so beschaffen sein, daß es eine empfangene Information "Fahrzeugstart" an die Antriebskomponenten des Kraftfahrzeugs zu übermitteln und dadurch den Start seiner Antriebseinheit auszulösen vermag.

Die übrigen Steuergeräte 11 bis 14 weisen je einen Anschaltsteuereingang 11.2 bis 14.2 auf, die alle mit der Anschaltsteuerleitung 15 verbunden sind. Des weiteren beinhaltet jedes dieser Steuergeräte hier nicht gezeigte interne Mittel, welche im Sinne einer Ansteuerbarkeit mit den entsprechenden Anschaltsteuereingängen 14.2 bis 11.4 in Wirkverbindung stehen und bei Ansteuerung den inneren Betriebsstromkreis der Steuergeräte 11 bis 14 schließen.

Beispielhaft kann es sich bei dem Steuergerät 11 um einen als einkörperliches Kombi-Instrument ausgeführten Instrumentenverbund in der Armaturentafel, beim Steuergerät 12 um ein Antiblockier-Bremssteuergerät, beim Steuergerät 13 um ein MotorSteuergerät und beim Steuergerät 14 um ein Komfort-Steuergerät mit diversen Funktionen handeln. Wie angedeutet kann das System noch weitere Steuergeräte umfassen. Gleichwohl könnte eines dieser Steuergeräte 11 bis 14 oder ein weiteres ähnliches eine Funktion zur Kontrolle und Steuerung der Fahrberechtigung integral mitumfassen und so beschaffen sein, daß es eine empfangene Information "Fahrzeugstart" an die Antriebskomponenten des Kraftfahrzeugs zu übermitteln und dadurch den Start seiner Antriebseinheit auszulösen vermag.

Das System funktioniert wie folgt.

Das System verharrt bei Nichtbetrieb als ganzes in einem Standby-Mode, der dadurch gekennzeichnet ist, daß nur das Steuergerät 10 einen geringen Ruhestrom aufnimmt, während die übrigen Steuergeräte 11 bis 14 abgeschaltet sind. Dies wird bewirkt durch ein entsprechendes logisches Signal an ihren Eingängen 11.2 bis 14.2, welches vom Anschaltsteuerausgang 10.15 des Standby-Steuergeräts 10 ausgegeben wird. Sobald das Steuergerät 10 ein Wecksignal an wenigstens einem seiner Eingänge 10.2 oder 10.3 empfängt, gibt es an seinem Anschaltsteuerausgang 10.15 ein Anschaltsignal an die Eingänge 11.2 bis 14.2 der übrigen Steuergeräte aus, was deren Einschaltung und Betriebsstromaufnahme bewirkt. Auf diese Weise können dann sofort Daten bzw. Informationen über den Bus 2 ausgetauscht werden, ohne daß dazu im Ruhezustand des Systems der Bus betriebsfähig gehalten werden muß und daher ein nennenswerter Stromverbrauch des Gesamtsystems auftritt.

Die Erfindung ist nicht auf ein System in einem Kraftfahrzeug oder Verkehrsmittel beschränkt. Vielmehr kann die Erfindung mit entsprechender Vorteilswirkung auch in Systemen für andere Anwendungen genutzt werden. Auch kann es sich bei dem Bus 2 gleichwohl um einen vom CAN-Typ abweichenden Bus handeln, beispielsweise auch um einen Eindrahtbus über Masse GND.

## Patentansprüche

1. System aus drahtbusvernetzten Steuergeräten wobei alle Steuergeräte (10 bis 14) zwecks ihrer betrieblichen Stromversorgung an zwei Versorgungsschienen (30, 31) dauerhaft angeschlossen (10.30 bis 14.30 bzw. 10.31 bis 14.31) sind und die beiden Versorgungsschienen (30, 31) mit den Speisepolen (1.30, 1.31) einer Betriebsstromquelle (1) dauerhaft in Verbindung stehen,
**dadurch gekennzeichnet,**
**daß** eines der Steuergeräte (10) mit einer Standby-Betriebsfunktion mit Weckbereitschaft ausgestattet ist und in Weckbereitschaft dauernd aktiv ist und außer seiner Kommunikationsverbindung (10.1) mit dem Bus (2) wenigstens einen separaten Signaleingang (10.2, 10.3) aufweist, über den es weckbar ist, daß dieses Steuergerät (10) einen separaten Anschaltsteuerausgang (10.15) aufweist, der bei Erreichen seines normalen Betriebszustandes (aus der Weckbereitschaft) ein Anschaltsignal abzugeben vermag, und daß jedes der übrigen Steuergeräte (11 bis 14) im Standby-Mode abgeschaltet ist und interne Mittel für seine steuerbare Stromversorgung aus den beiden Versorgungsschienen (30, 31) und einen Anschaltsteuereingang (11.2 bis 14.2) aufweist, dem ein Anschalt-Steuersignal zur Aktivierung besagter internen Mittel zuführbar ist und daß der Anschaltsteuereingang (11.2 bis 14.2) eines jeden dieser Steuergeräte (11 bis 14) mit vorgenanntem Anschaltsteuerausgang (10.15) in Verbindung (15) steht und bei Ausgabe des Anschaltsignals die übrigen Steuergeräte (11 bis 14) bestrombar und somit in Betriebsbereitschaft versetzbar sind.

2. System gemäß Anspruch 1, **dadurch gekennzeichnet, daß** das System Bestandteil eines Verkehrsmittels ist.

3. System gemäß Anspruch 2, **dadurch gekennzeichnet, daß** dem Steuergerät mit Standby-Betriebsfunktion (10) an seinem wenigstens einen separaten Signaleingang (10.3) ein Signal aufgrund der Betätigung eines Türkontakts (4) zuführbar (3) ist.

4. System gemäß Anspruch 2, **dadurch gekennzeichnet, daß** dem Steuergerät mit Standby-Betriebsfunktion (10) an seinem wenigstens einen separaten Signaleingang (10.2) ein Signal aufgrund des Empfanges im Verkehrsmittel einer von extern eingestrahlten Fernbedienungsinformation zuführbar (5) ist.

5. System gemäß Anspruch 2, **dadurch gekennzeichnet, daß** das Steuergerät mit Standby-Betriebsfunktion (10) mit Mitteln ausgestattet ist, die es ihm ermöglichen, einen Zutritt zum Verkehrsmittel zu erkennen.

6. System gemäß Anspruch 2, **dadurch gekennzeichnet, daß** eines der übrigen Steuergeräte (11 bis 14) wenigstens eine Funktion zur Kontrolle und Steuerung der Fahrberechtigung integral mitumfaßt und so beschaffen ist, daß es eine empfangene Information "Verkehrsmittelstart" an die Antriebskomponenten des Verkehrsmittels zu übermitteln und dadurch den Start seiner Antriebseinheit auszulösen vermag.

7. System gemäß Anspruch 2, **dadurch gekennzeichnet, daß** das Steuergerät (10) mit Standby-Betriebsfunktion die Funktion eines Steuergeräts zur Kontrolle und Steuerung der Fahrberechtigung integral mitumfaßt und so beschaffen ist, daß es eine empfangene Information "Verkehrsmittelstart" an die Antriebskomponenten des Verkehrsmittels zu übermitteln und dadurch den Start seiner Antriebseinheit auszulösen vermag.

8. System gemäß Anspruch 1, **dadurch gekennzeichnet, daß** es sich bei dem Drahtbus (2) um einen vom CAN-Typ handelt.

9. System gemäß Anspruch 2, **dadurch gekennzeichnet, daß** es sich bei einem der übrigen Steuergeräte (11 bis 14) um ein Kombi-Instrument in der Armaturentafel, ein ABS-Steuergerät, ein Motor-Steuergerät oder ein Komfort-Steuergerät handelt.

## Claims

1. System comprising wire bus interlinked control units such that for the supply of their operating current all the control units (10 to 14) are permanently connected (10.30 to 14.30 and 10.31 to 14.31 respectively) to two supply rails (30, 31) and the two supply rails (30, 31) are permanently connected to the feed terminals (1.30, 1.31) of an operating current source (1),
**characterised in that**
one of the control units (10) is equipped with a standby operation function and is maintained constantly in readiness to be activated, and apart from its communication connection (10.1) with the bus (2), it comprises at least one separate signal input (10.2, 10.3) via which it can be activated, the said control unit (10) having a separate switching control input (10.15) which, when it reaches its normal operating condition (from the said standby mode) is able to emit a switching signal, and each of the other control units (11 to 14) is switched off in the standby mode and comprises internal means for its controllable supply with current from the two supply rails (30, 31) and a switching control input (11.2 to 14.2) to which a switching control signal to activate the said internal means can be fed, and the switching control (11.2 to 14.2) of each of these control units (11 to 14) is connected to the aforesaid switching control output (10.15) and, when the switching signal is emitted, the other control units (11 to 14) can be supplied with current and put into a condition of readiness for operation.

2. System according to Claim 1,
**characterised in that**
the system is part of a transport vehicle.

3. System according to Claim 2,
**characterised in that**
a signal derived from the operation of a door contact (4) can be fed (3) to the control unit having the standby operation function (10) via its at least one separate signal input (10.3).

4. System according to Claim 2,
**characterised in that**
a signal derived from the reception in the vehicle of a remote operation datum transmitted from outside can be fed (5) to the control unit having the standby operation function (10) via its at least one separate signal input (10.2).

5. System according to Claim 2,
**characterised in that**
the control unit having the standby operation function (10) is equipped with means that enable it to recognise when somebody has entered the vehicle.

6. System according to Claim 2,
**characterised in that**
one of the other control units (11 to 14) integrally comprises a function for checking and controlling the vehicle's drive authorisation system and is designed such that it can transmit a received "vehicle start" datum to the vehicle's drive components and thereby make it possible to start the vehicle's drive unit.

7. System according to Claim 2,
**characterised in that**
the control unit (10) with the standby operation function integrally comprises a control unit for checking and controlling the vehicle's drive authorisation system and is designed such that it can transmit a received "vehicle start" datum to the vehicle's drive components and thereby make it possible to start the vehicle's drive unit.

8. System according to Claim 1,
**characterised in that**
its wire bus (2) is a bus of the CAN type.

9. System according to Claim 2,
**characterised in that**
one of the other control units (11 to 14) is a combination instrument in the instrument panel, an ABS control unit, an engine control unit or a comfort regulation unit.

## Revendications

1. Système composé d'appareils de commande en réseau par bus filaire, tous les appareils de commande (10 à 14) étant raccordés (10.30 à 14.30 et/ou 10.31 à 14.31) durablement, dans le but de leur alimentation électrique de fonctionnement, à deux barres d'alimentation (30, 31), et les deux barres d'alimentation (30, 31) étant reliées durablement aux pôles d'alimentation (1.30, 1.31) d'une source de courant de fonctionnement (1),
**caractérisé en ce que**
l'un des appareils de commande (10) est équipé d'une fonction opérationnelle en stand-by avec une disponibilité au réveil et est actif de façon durable, en état de disponibilité au réveil, et présente, outre sa liaison de communication (10.1) avec le bus (2), au moins une entrée de signal (10.2, 10.3) séparée, par l'intermédiaire de laquelle il peut être réveillé, en ce que cet appareil de commande (10) présente une sortie de commande de branchement (10.15) séparée qui, en cas d'atteinte de son état de fonctionnement normal (depuis la disponibilité au réveil), peut fournir un signal de branchement, et ce que chacun des autres appareils de commande (11 à 14) est mis hors service, en mode Stand-by, et présente des moyens internes, pour assurer son alimentation électrique, pouvant être commandée, depuis les deux barres d'alimentation (30, 31) et une entrée de commande de branchement (11.2 à 14.2), à laquelle un signal de commande de branchement peut être amené pour l'activation desdits moyens internes, et en ce que l'entrée de commande de branchement (11.2 à 14.2) de chacun de ces appareils de commande (11 à 14) est reliée (15) à la sortie de commande de branchement (10.15) précitée et, en cas d'envoi du signal de branchement, les autres appareils de commande (11 à 14) sont susceptibles d'être alimentés électriquement et, ainsi, d'être mis en disponibilité pour le fonctionnement.

2. Système selon la revendication 1, **caractérisé en ce que** le système fait partie d'un moyen de transport.

3. Système selon la revendication 2, **caractérisé en ce qu'**à l'appareil de commande équipé d'une fonction opérationnelle en stand-by (10) est susceptible d'être amené (3), à sa au moins une entrée de signal séparée (10.3), un signal du fait de l'actionnement d'un contact de porte (4).

4. Système selon la revendication 2, **caractérisé en ce qu'**à l'appareil de commande, muni d'une fonction opérationnelle de stand-by (10), est susceptible d'être amené (5), à sa au moins une entrée de signal (10.2) séparée, un signal, sur la base de la réception, dans le moyen de transport, d'une information de télécommande émise depuis un point externe.

5. Système selon la revendication 2, **caractérisé en ce que** l'appareil de commande, muni d'une fonction opérationnelle de stand-by (10), est équipé de moyens qui lui permettent d'identifier un accès au moyen de transport.

6. Système selon la revendication 2, **caractérisé en ce que** l'un des autres appareils de commande (11 à 14) comprend, de façon intégrale, au moins une fonction de contrôle et de commande de l'autorisation de roulage et est tel qu'il permet de transmettre une information reçue, "type de moyen de transport", aux composants d'entraînement du moyen de transport et permet de ce fait de déclencher le démarrage de son groupe d'entraînement.

7. Système selon la revendication 2, **caractérisé en ce que** l'appareil de commande (10) muni d'une fonction opérationnelle de stand-by comprend, de façon intégrale, la fonction d'un appareil de commande pour assurer le contrôle et la commande de l'autorisation de roulage et est tel qu'il peut transmettre une information reçue, "type de moyen de transport", aux composants d'entraînement du moyen de transport et de déclencher de ce fait le démarrage de son groupe d'entraînement.

8. Système selon la revendication 1, **caractérisé en ce qu'**il s'agit pour le bus filaire (2) d'un bus de type CAN.

9. Système selon la revendication 2, **caractérisé en ce qu'**il s'agit, dans le cas d'un des autres appareils de commande (11 à 14), d'une instrumentation combinée, montée dans le tableau de bord, d'un appareil de commande ABS, d'un appareil de commande de moteur, ou d'un appareil de commande de confort.
